## Europäisches Patentamt
## European Patent Office
## Office européen des brevets

(11) Publication number: **0 125 251**
**B1**

(12) **EUROPEAN PATENT SPECIFICATION**

(45) Date of publication of patent specification: **08.07.87**

(51) Int. Cl.⁴: **B 60 P 3/34**

(21) Application number: **83903364.4**

(22) Date of filing: **27.10.83**

(86) International application number:
**PCT/AU83/00157**

(87) International publication number:
**WO 84/01753 10.05.84 Gazette 84/12**

(54) **MOBILE HOME.**

(30) Priority: **29.10.82 AU 6591/82**

(43) Date of publication of application:
**21.11.84 Bulletin 84/47**

(45) Publication of the grant of the patent:
**08.07.87 Bulletin 87/28**

(84) Designated Contracting States:
**AT BE CH DE FR GB LI LU NL SE**

(56) References cited:
**AU-A- 130 832**
**GB-A-1 477 926**
**US-A-2 485 463**
**US-A-3 157 427**
**US-A-3 233 935**
**US-A-3 655 236**
**US-A-3 737 191**

**The file contains technical information
submitted after the application was filed and
not included in this specification**

(73) Proprietor: **BARBER, Arthur Brian**
**111 Albert Street**
**Strathfield, NSW 2135 (AU)**
(73) Proprietor: **LOBERG, John**
**95 Yanderra Street**
**Condell Park, NSW 2200 (AU)**

(72) Inventor: **BARBER, Arthur Brian**
**111 Albert Street**
**Strathfield, NSW 2135 (AU)**
Inventor: **LOBERG, John**
**95 Yanderra Street**
**Condell Park, NSW 2200 (AU)**

(74) Representative: **King, James Bertram**
**Kings Patent Agency Limited Wardrobe Court**
**146a Queen Victoria Street**
**London EC4V 5AT (GB)**

Courier Press, Leamington Spa, England.

## Description

This invention relates to mobile homes by which is meant a structure which will provide habitable areas but which is supported on wheels allowing it to be towed from place to place. Often the term caravan is used for such equipment but mobile homes are larger and more sophisticated than the equipment which is commonly called by the name caravan.

The modern mobile home usually includes internal divisions to provide living areas connected by doorways. Often a mobile home is large enough to include separate bathing, bed and living rooms.

Mobile homes as made hitherto have been limited as to internal configuration because government regulations limit the width of a vehicle that can be towed under normal road conditions. Vehicles in excess of the regulation width are not registered for regular road usage. For the above reasons mobile homes have tended to be narrow compared to their length.

Many parking estates catering for towed mobile homes provide connections for water and electrical power and often waste water connections. Many of the parking estates have been in use for many years and when laid out did not make allowance for mobile homes of the size now used. Accordingly, the owners of many of the latest large mobile homes are excluded from desirable parking estates.

It has however been a feature of nearly all parking estates to provide alongside the area allocated to the mobile home another area on which a tent-like annex to the mobile home was erected. Whilst this provided storage space it was not suitable as a living area during very hot or wet weather.

The present applicants have developed a mobile home which takes advantage of the conventional parking estate arrangement by utilizing both the allocated mobile home position and the annex position for parts of a mobile home which can change configuration between a towing configuration and a living configuration.

U.S. Specification 3233935 (Brindle) discloses a portable building of the kind contemplated by the present invention but Brindle has shown nothing of the structure that is needed to support adequately any habitable portions. As will be appreciated in practice loads on hinge connections between the habitable portions are enormous. Brindle has endeavoured to overcome this difficulty to some extent by providing a central wheel assembly 60/61 on the "tow" section of the assembly. The present applicants have found that such wheel assembly is not entirely satisfactory for several reasons. In transit the wheel assembly 60/61 would have a tendency to "bottom" on the slightest hump in the road between the hitch level and the wheels 59. This would put great shearing forces on the connections 42/44 and if the assembly 60/61 were to bottom the whole of the unit 12 would be cantilevered with all the load of the cantilevered portion on the connections 42/44. If the leverage should become too great (due to the weight rearward of the wheel assembly 60/61) as could possibly happen, and the hinge connections were able to withstand the strain, the result would be that the wheels remained on the ground and the rear end of the towing vehicle would be lifted. From a geometrical viewpoint it is highly unlikely that the wheel assembly 60/61 would allow the section 10 to pivot relative to the section 12 without side scuff of the wheels 60 across the ground.

Whilst Brindle has put forward the basic concept of two parts each supported on wheels as the preferred arrangement he has recognised the inherent problems with such an arrangement and has said that it may be desirable in certain applications to arrange the wheels (60) to be retracted during towing. Contrary to the assertion of Brindle that conventional well-known retractable running gear might be used for the wheel arrangement (60, 61) the applicants believe the design of the running gear needed would be complex if sufficient ground clearance were to be achieved.

Brindle however does not address the problem of designing the habitable portions, in the regions of the hinges and catch means to interlock the habitable portions, with the result that very high stresses will occur in either of his proposed configurations, i.e. the wheels down and the wheels up configurations, when the building is under tow or stationary. The applicants have devised a simple and efficient construction including full perimeter frames with strongly braced uprights as mountings for the hinges and locking catches.

According to the present invention there is provided a mobile home having two habitable parts (A, B), one part (A) having road wheels (12) and the other part (B) having a towing bar (11), hinge means (7) between corresponding first sides of the parts (A, B) to permit the parts (A, B) to adopt a towing configuration with the parts (A, B) end to end or a residential use configuration with the first sides of the parts (A, B) side by side, releasable catch means (8, 9) to hold the parts (A, B) in the end to end configuration and on release to allow the parts (A, B) to adopt the side by side configuration, complementing door means (14, 15) in the first sides of the parts (A, B) so positioned that when the two habitable parts (A, B) are in the side by side relationship personal communication between living areas within the habitable parts (A, B) is possible, characterised in that one habitable part (A) comprises a first subframe (2) with two parallel sides (2a, 2a) and two parallel ends (2b, 2b) and road wheels (12) attached to the sub-frame (2), an upright (5, 6) fixed to the sub-frame (2) where each side (2a, 2a) joins one of the ends (2b), a diagonal brace (10) from each upright (5, 6) to the adjacent sub-frame side (2a), a second sub-frame (1) having two parallel sides (1a, 1a) and two parallel ends (1b, 1b) and having a width from side to side the same as the first sub-frame (2), a towing bar (11) mounted at one end (1b) of the second sub-frame (1), an upright (3, 4) fixed to the second sub-frame (1) where each of its sides (1a, 1a) joins the other of its ends (1b) which lies adjacent said one end (2a) of the first sub-frame (2), a diagonal brace (10) from each of the uprights (3, 4) on the second sub-frame (1) to the adjacent side (1a) of the second sub-frame (1), hinge means (7) connecting adjacent uprights (5, 3) of the first and second sub-frames (2, 1), releasable catch means (8, 9) connecting the other uprights (6, 4) of the first and second sub-frames (2, 1), a habitable enclosure on the first sub-frame (2) to provide the living area of the mobile home part (A) and a habitable enclosure on the second sub-frame (1) to provide the living area of the mobile home part (B).

A preferred form of the mobile home according to the invention will now be described with reference to the accompanying drawings in which:—

Figure 1 is a schematic side elevation of a towing frame, the cladding and its supporting frame-work and interior fittings of the mobile home not being shown in order to facilitate explanation,

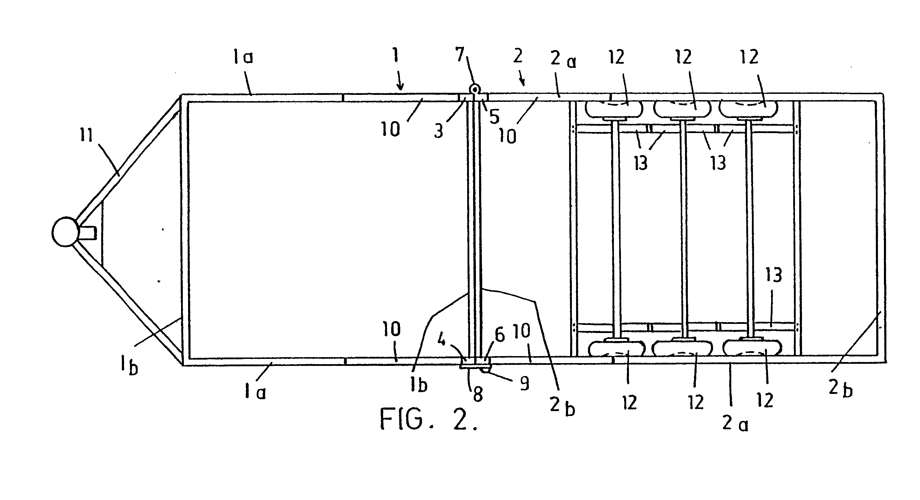

Figure 2 is a plan view of the towing frame as shown in Figure 1, and

Figure 3 is a view showing a conversion of the assembly of Figure 2 to the configuration adapted for stationary use.

In the drawings the mobile home is comprised basically of a sub-frame 1 and a sub-frame 2 located end to end with uprights 3 and 4 on the sub-frame 1 located respectively adjacent uprights 5 and 6 on the sub-frame 2.

The sub-frames 1 and 2 each include a pair of opposed, parallel sides 1a, 1a; 2a, 2a; ends 1b, 1b and 2b, 2b respectively. There are hinges 7 coupling the uprights 3 and 5 and there is a plate 8 on the upright 4 which overlies the upright 6 and there is a bolt 9 connecting the upright 6 to the plate 8. If desired several plates 8 and bolts 9 could be used to provide catch means. In this way the sub-frames are rigidly interconnected into an elongated towing frame 1—2. The uprights 3 to 6 are tied to the sub-frames 1 and 2 by diagonal braces 10.

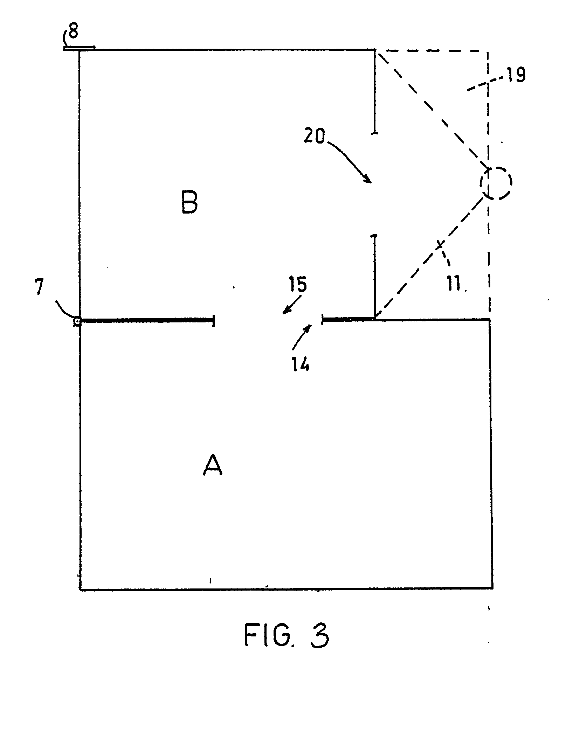

At the leading end of the sub-frame 1 there is a tow bar 11 adapted in known manner to be hitched to a towing vehicle. There are wheels 12 coupled through springs 13 to the underside of sub-frame 2. By mounting cladding on skeletal framework erected on the sub-frames 1 and 2 two superstructures are created which form habitable enclosures. As shown in Figure 3 there are doorways 14 and 15 in the framework and cladding, which define the living areas A and B, that are aligned when the parts are positioned as shown in Figure 3 to allow free movement between the areas A and B. Other doorways and windows can be provided as desired.

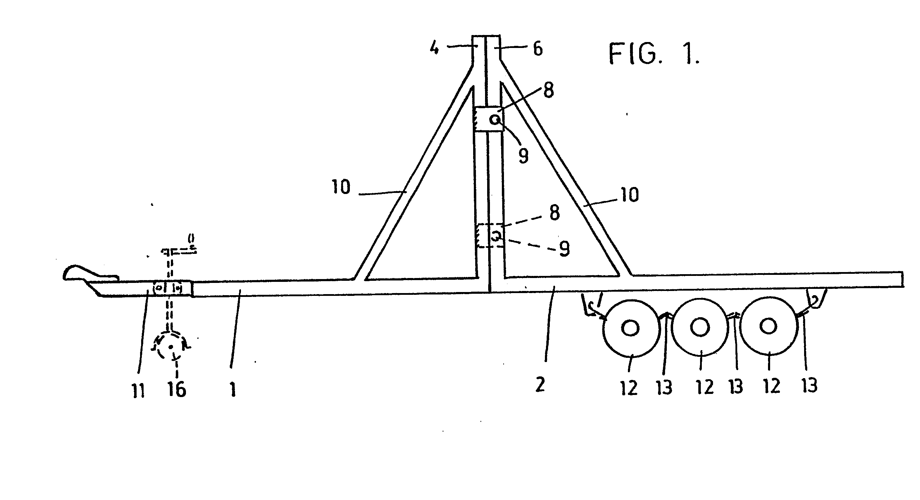

When a mobile home as proposed reaches a site where it is to be located for some time the towing vehicle is unhitched after a jockey wheel indicated at 16 in Figure 1 is fixed in place. The jockey wheel can be mounted and de-mounted as required and is usually stored in the towing vehicle during transport of the mobile home from site to site. The next operation is to remove the bolts 9 to allow the sub-frame 1 and its superstructure to be hinged at 7 relative to the sub-frame 2. Hinging is continued until a configuration equivalent to that shown in Figure 3 is achieved. Infill panels which cover the doorways 14 and 15 during movement of the mobile home on the road may be used for other purposes, as for example panels around a verandah portion of the Figure 3 arrangement.

The sub-frames 1 and 2 are provided with jacking type levelling legs of any convenient type, not shown, allowing the floors of the living areas A and B to be levelled and made co-planar.

As illustrated the hinging of the parts A and B is achieved by using hinges 7 on the uprights 3 and 5. In another possible configuration the uprights 3 to 6 are shortened and they project a short distance below the sub-frames 1 and 2. This allows a spaced disposition of hinges 7 above and below the sub-frames 1 and 2. To facilitate the hinging of the part B relative to the part A an upper hinge 7 can be fixed to the adjacent corner posts of the skeletal superstructure supporting cladding of the parts A and B.

As illustrated the sub-frame 1 is shorter than the sub-frame 2, this is however an optional arrangement. There is a fold down panel 19 over the towbar 11 to provide a verandah floor onto which persons using the mobile home can walk through the doorway provided at 20. The panel 19 is preferably retained in an elevated position against the front of the superstructure of living area B during movement of the mobile home on the road.

There is a sealing strip of compressible material (not shown) along the margins of the sides of the living areas A and B which lie in face to face relationship to prevent rain from passing down between the sides when the mobile home is in the Figure 3 configuration.

Hinge connection between the living areas A and B can be of any suitable type and can include adjacent columns in the skeletal frames or superstructures of the living areas A and B for mounting of the hinge elements.

## Claim

A mobile home having two habitable parts (A, B), one part (A) having road wheels (12) and the other part (B) having a towing bar (11), hinge means (7) between corresponding first sides of the parts (A, B) to permit the parts (A, B) to adopt a towing configuration with the parts (A, B) end to end or a residential use configuration with the first sides of the parts (A, B) side by side, releasable catch means (8, 9) to hold the parts (A, B) in the end to end configuration and on release to allow the parts (A, B) to adopt the side by side configuration, complementing door means (14, 15) in the first sides of the parts (A, B) so positioned that when the two habitable parts (A, B) are in the side by side relationship personal communication between living areas within the habitable parts (A, B) is possible, characterised in that one habitable part (A) comprises a first sub-frame (2) with two parallel sides (2a, 2a) and two parallel ends (2b, 2b) and road wheels (12) attached to the sub-frame (2), an upright (5, 6) fixed to the sub-frame (2) where each side (2a, 2a) joins one of the ends (2b), a diagonal brace (10) from each upright (5, 6) to the adjacent sub-frame side (2a), a second sub-frame (1) having two parallel sides (1a, 1a) and two parallel ends (1b, 1b) and having a width from side to side the same as the first sub-frame (2), a towing bar (11) mounted at one end (1b) of the second sub-frame (1), an upright (3, 4) fixed to the second sub-frame (1) where each of its sides (1a, 1a) joins the other of its ends (1b) which lies adjacent said one end (2b) of the first sub-frame (2), a diagonal brace (10) from each of the uprights (3, 4) on the second sub-frame (1) to the adjacent side (1a) of the second sub-frame (1), hinge means (7) connecting adjacent uprights (5, 3) of the first and second sub-frames (2, 1), releasable catch means (8, 9) connecting the other uprights (6, 4) of the first and second sub-frames (2, 1), a habitable enclosure on the first sub-frame (2) to provide the living area of the mobile home part (A) and a habitable enclosure on the second sub-frame (1) to provide the living area of the mobile home part (B).

**Patentanspruch**

Mobilheim mit zwei bewohnbaren Teilen (A, B), von denen der eine (A) mit Laufrädern (12) versehen ist, während der andere (B) eine Schleppstange (11) aufweist, einem zwischen einander entsprechenden ersten Seiten der Teile (A, B) angeordneten Gelenkanschluss (7), der es den Teilen (A, B) ermöglicht, sich sowohl mit ihren Enden aneinander anzulegen und somit die zum Schleppbetrieb benötigte Lage einzunehmen als auch mit ihren jeweiligen ersten Seiten anliegend in die zum Bewohnen nötige Lage überführt zu werden, lösbaren Arretiervorrichtungen (8, 9), mittels derer die Teile (A, B) mit den Enden aneinander zusammengehalten bzw. nach der Ausklinkung mit ihren Seiten aneinander anliegend festgesetzt werden können, sowie ergänzenden Türanordnungen (14, 15), die derart in den ersten Seiten der Teile (A, B) montiert sind, dass in der seitlichen Lage der zwei bewohnbaren Teile zueinander der Verkehr zwischen jeweiligen Wohnbereichen innerhalb der bewohnbaren Teile (A, B) ermöglicht wird, dadurch gekennzeichnet, dass der eine bewohnbare Teil (A) einen zwei parallele Seiten (2a, 2a) sowie zwei parallele Enden (2b, 2b) aufweisenden ersten Unterrahmen (2), am Unterrahmen (2) angebaute Laufräder (12), eine am Unterrahmen (2) u. zw. an der Verbindungsstelle zwischen jeder Seite (2a, 2a) und einem der Enden (2b) angebrachte Vertikale (5, 6), eine sich von jeder Vertikale (5, 6) bis zur benachbarten Seite (2a) des Unterrahmens erstreckende Diagonalstrebe (10), einen zwei parallele Seiten (1a, 1a) sowie zwei parallele Enden (1b, 1b) aufweisenden zweiten Unterrahmen, dessen von der einen Seite bis zur anderen gemessene Breite derjenigen des ersten Unterrahmens (2) entspricht, eine an dem einen Ende (1b) des zweiten Unterrahmens (1) angebaute Schleppstange (11), am zweiten Unterrahmen (1) u. zw. an der Verbindungsstelle zwischen deren Seiten (1a, 1a) und deren anderem, dem einen Ende (2b) des ersten Unterrahmens (2) benachbarten Ende (1b) angebaute Vertikalen (3, 4), eine sich von jeder der Vertikalen (3, 4) am zweiten Unterrahmen (1) bis zur benachbarten Seite (1a) des zweiten Unterrahmens (1) erstreckende Diagonalstrebe (10), einen die benachbarten Vertikalen (5, 3) des ersten bzw. zweiten Unterrahmens (2, 1) miteinander verbindenden Gelenkanschluss (7), die jeweils anderen Vertikalen (6, 4) des ersten und zweiten Unterrahmens (2, 1) miteinander verbindende losbare Arretiervorrichtungen (8, 9), einen am ersten Unterrahmen (2) vorhandenen zur Bildung des Wohnbereichs des Mobilwohnungsteils (A) vorgesehenen bewohnbaren Raum sowie einen am zweiten Unterrahmen (1) vorhandenen zur Bildung des Wohnbereichs des Mobilwohnungsteils (B) vorgesehenen bewohnbaren Raum umfasst.

**Revendication**

Habitation mobile comprenant deux parties habitables (A, B) dont l'une (A) est équipée de roues porteuses (12) tandis que l'autre est pourvue d'une barre de remorque (11), avec un assemblage à charnière (7) monté entre les premiers côtés correspondants des parties (A, B) et servant à permettre auxdites parties (A, B) de prendre soit une position de remorque dans laquelle lesdites parties (A, B) se trouvent bout à bout, soit une position qui est propre à l'habitation et dans laquelle lesdits premiers côtés respectifs des parties (A, B) se trouvent côte à côte, des dispositifs d'arrêt désassemblables (8, 9) ayant pour but de fixer les parties (A, B) dans la position bout à bout et de permettre auxdites parties (A, B) de prendre la position côte à côte après avoir été déclenchées, des portes complémentaires (14, 15) situées dans les premiers côtés des parties (A, B) et positionnées de manière à permettre la communication personnelle entre des zones de séjour à l'intérieur des parties habitables (A, B) lorsque lesdites parties habitables se trouvent côte à côte, caractérisée en ce que l'une (A) des parties habitables comprend un premier cadre secondaire (2) ayant deux côtés parallèles (2a, 2a) et deux bouts parallèles (2b, 2b) et des roues porteuses (12) attachées audit cadre secondaire (2), un montant (5, 6) fixé sur la partie du cadre secondaire (2) dans laquelle chacun des côtés (2a, 2a) est attenant à l'un desdits bouts, une entretoise diagonale (10) s'étendant à partir de chaque montant (5, 6) jusqu'au côté adjacent (2a) du cadre secondaire (1), un deuxième cadre secondaire (1) qui possède deux côtés parallèles (2a, 2a) et dont la largeur à partir d'un côté jusqu'à l'autre est égale à la largeur correspondante du premier cadre secondaire (2), une barre de remorque (11) montée sur l'un des bouts (1b) du deuxième cadre secondaire (1), un montant (3, 4) fixé sur la partie du deuxième cadre secondaire dans laquelle chacun des côtés de ce dernier est attenant à l'autre de ses bouts (1b) qui se trouve adjacent audit bout (2b) du premier cadre secondaire (2), une entretoise diagonale (10) s'étendant à partir de chacun des montants (3, 4) sur le deuxième cadre secondaire (1) jusqu'au côté adjacent (1a) du deuxième cadre secondaire, un assemblage à charnière (7) au moyen duquel les montants adjacents (5, 3) des premier et deuxième cadres secondaires (2, 1) sont raddordés, des dispositifs d'arrêt désassemblables (8, 9) raccordant les autres montants (6, 4) des premier et deuxième cadres secondaires (2, 1), une enceinte habitable sur le premier cadre secondaire (2), formant la zone de séjour de la partie (A) de l'habitation mobile, et une enceinte habitable sur le deuxième cadre secondaire (1), formant la zone de séjour de la partie (B) de l'habitation mobile.

FIG. 1.

0 125 251

FIG. 2.

0 125 251

FIG. 3